# FASCICULE DE BREVET EUROPEEN

(11) **EP 2 462 834 B1**
(45) Date de publication et mention de la délivrance du brevet: **08.05.2013**
(21) Numéro de dépôt: 11192595.4
(22) Date de dépôt: 08.12.2011
(51) Int. Cl.: A45F 3/04

(54) **Sac à dos pour alimenter une propulsion électrique**
Rucksack zur Stromversorgung eines elektrischen Antriebs
Backpack for feeding an electric drive

(30) Priorité: 10.12.2010 FR 1060377
(43) Date de publication de la demande: 13.06.2012
(73) Titulaire: MATRA MANUFACTURING & SERVICES, 75016 Paris (FR)
(72) Inventeur: Bonneville, Jacques, 77400 Lagny-sur-Marne (FR)
(74) Mandataire: Cabinet Plasseraud

(56) Documents cités:
- EP-A1- 1 232 938
- DE-U1- 20 209 138
- US-A1- 2006 163 303
- US-A1- 2008 210 728

## Description

La présente invention se rapporte à un sac à dos comprenant une batterie électrique susceptible d'alimenter la propulsion électrique d'un véhicule tel qu'un vélo ou un scooter, ou encore un moyen de locomotion plus léger tel qu'une trottinette.

Plus particulièrement, l'invention se rapporte à un sac à dos de ce type comprenant une poche principale délimitée par une paroi dorsale destinée à venir en contact avec le dos d'un utilisateur, une paroi extérieure agencée de manière opposée à la paroi dorsale et une paroi latérale reliant les parois dorsale et extérieure, au moins la paroi dorsale et la paroi latérale étant réalisées en une matière flexible, ladite poche principale contenant des éléments de batterie logés dans un boîtier rigide.

En logeant la batterie électrique dans un sac à dos, il n'est plus nécessaire de modifier la structure du véhicule pour intégrer la batterie. Il est ainsi possible de motoriser avec une autonomie suffisante des véhicules très légers, tels qu'une trottinette, comme cela est décrit dans le document EP1232938 A1.

Cette solution peut aussi améliorer considérablement la facilité d'usage d'un véhicule électrique, comme par exemple un vélo de ville. En effet, l'utilisateur emmène ainsi naturellement la batterie à son domicile ou sur son lieu de travail où il peut la recharger. Tandis que le véhicule qui reste éventuellement stationné dans un espace public est beaucoup moins susceptible de vol et en particulier sa batterie.

L'emport d'une batterie dans un sac à dos peut toutefois soulever des problèmes, par exemple en cas de chute de l'utilisateur. En effet, une batterie constitue un élément rigide, lourd et particulièrement dense, sensiblement plus dense qu'un ordinateur portable. Par ailleurs, s'agissant d'une batterie de propulsion, celle-ci doit être capable de stocker une énergie relativement importante. Malgré la capacité massique toujours croissante des batteries, son poids peut difficilement être inférieur à deux kilos de nos jours. Il est donc nécessaire de prendre certaines précautions pour concevoir un sac à dos contenant une batterie de propulsion dont l'emport soit suffisamment sûr pour être utilisé en toute confiance par les utilisateurs. En effet, les utilisateurs associent toujours la batterie à un objet très lourd et semblent réticents à adopter une telle solution, ce qui peut expliquer l'absence de réalisation concrète à ce jour.

La présente invention a donc pour objet de proposer une structure de sac à dos permettant l'emport d'une batterie de propulsion dans des conditions améliorées, notamment concernant la sécurité de l'utilisateur en cas de chute.

A cet effet, la présente invention a pour objet un sac à dos du type précité, caractérisé en ce que le boîtier de batterie présente une face dorsale agencée parallèlement et à proximité de la paroi dorsale de la poche principale, et en ce que la paroi extérieure de ladite poche principale présente un élément de coque significativement plus rigide que la matière textile des parois dorsales et latérales, qui est agencée en regard dudit boîtier de batterie et qui recouvre une zone plus étendue que celle correspondant audit boîtier de batterie.

Il s'avère que le fait de prévoir une coque extérieure a un effet bénéfique sur la protection de l'utilisateur dans certains cas de chute, même si cet élément n'est pas disposé entre la batterie et l'utilisateur et ne protège donc pas directement l'utilisateur. Dans certains cas de chute, le sac à dos peut heurter un élément saillant, tel qu'une arête de trottoir ou le sommet d'une borne, en créant un point d'appui sur le sac qui est très ponctuel. Avec un sac usuel, ce point d'appui qui reçoit la majeure partie de l'énergie d'impact peut venir exercer une pression sur une portion périphérique du boîtier de batterie entraînant un effort dissymétrique sur celui-ci. Le boîtier de batterie est alors soumis à un mouvement de pivotement intégralement transmis à la face dorsale du fait de sa grande rigidité, rigidité bien plus grande que celle des objets usuellement contenus dans un sac à dos. La face dorsale n'est alors plus parallèle au dos de l'utilisateur et risque alors de transmettre l'énergie d'impact à l'utilisateur de manière quasiment tout aussi ponctuelle qu'à l'extérieur du sac. Il peut alors y avoir un phénomène de poinçonnement du dos de l'utilisateur, même en prévoyant une épaisseur de matériau déformable entre le boîtier de batterie et la paroi dorsale étant donné que la surface compressée de ce matériau peut rester relativement réduite.

En prévoyant une coque extérieure relativement rigide, c'est-à-dire qu'elle peut être totalement indéformable ou plus ou moins déformable par zone mais en exerçant un effort bien plus élevé que sur les parois en matière textile de la poche principale, on favorise une répartition de l'énergie du point d'impact sur une zone plus étendue qui tend à répartir l'effort sur une plus large surface du boîtier de batterie et réduit donc l'effet potentiellement dissymétrique de cet impact. Le risque de poinçonnement du dos de l'utilisateur lors d'une chute est par conséquent diminué. Simultanément, la coque de la paroi extérieure du sac peut diffuser une partie de l'énergie d'impact en comprimant le contenu de la poche principale disposée entre le boîtier de batterie et la paroi dorsale ou autour du boîtier de batterie. Ce contenu étant généralement bien plus déformable ou susceptible de s'écraser lors d'un choc, il permet d'absorber une partie de l'impact qui n'est alors pas transmis au dos de l'utilisateur par le boîtier rigide.

La présence d'une coque a aussi l'avantage à limiter le risque de perforation du boîtier de batterie, par exemple par un objet particulièrement pointu ou tranchant.

Dans des modes de réalisation préférés de l'invention, on peut avoir recours, en outre, à l'une et/ou à l'autre des dispositions suivantes.

Le boîtier de batterie présente une forme aplatie avec une plus grande face correspondant à la face dorsale dudit boîtier. Ceci permet dans bon nombre de cas de chute de répartir de l'impact sur une zone étendue du dos, mais aussi de limiter la hauteur du boîtier faisant saillie par rapport à la paroi dorsale du sac.

Le boîtier de batterie s'étend horizontalement sur sensiblement toute la largeur de la paroi dorsale du sac. Cette disposition permet aussi d'augmenter la surface d'appui et de réduire l'épaisseur du boîtier pour un volume constant de batterie.

La paroi dorsale du sac présente une garniture comprenant au moins une couche élastiquement déformable d'absorption de choc et au moins une couche de rigidification. L'association de la couche de rigidification avec la couche d'absorption permet d'élargir la zone d'appui sur le dos en cas d'impact dissymétrique sur le boîtier de batterie et ce, avec une épaisseur totale sensiblement inférieure à celle qui serait nécessaire avec uniquement un matériau élastiquement déformable.

Le boîtier de batterie est agencé en regard d'une portion inférieure de la paroi dorsale et à distance du fond sur lequel le sac est destiné à reposer. L'agencement de la batterie dans la partie inférieure du sac est favorable à la stabilité de celui-ci et à l'équilibre de l'utilisateur, en abaissant le centre de gravité. Toutefois, en s'assurant que le boîtier de batterie reste à distance du fond, on évite des chocs répétés qui peuvent s'avérer à la longue dommageables pour ce boîtier.

Le boîtier de batterie est agencé dans la poche principale de sorte qu'une face extérieure du boîtier de batterie opposée à la face dorsale de celui-ci soit agencé à distance de la paroi extérieure de ladite poche principale lorsqu'elle est remplie. Ainsi, on ménage un espace entre la batterie et la paroi extérieure qui est susceptible d'être rempli par des affaires moins rigides que la batterie et susceptibles d'absorber une partie d'un choc.

Le boîtier de batterie est agencé dans un compartiment intérieur à la poche principale, ledit compartiment étant réalisé en matériau imperméable. Ainsi, la batterie est protégée de l'eau et de divers fluides par une barrière.

La coque associée à la paroi extérieure est globalement déformable et de préférence réalisée en mousse de polymère thermoformée. Ainsi, le sac à dos reste pratique d'utilisation. Il est notamment possible de réduire le volume du sac vide en pliant pour le ranger, tout en obtenant un gain pratique de sécurité avec ce type de matériau.

La coque est agencée sur la face extérieure de la paroi de la poche principale et couvre la majeure partie de la paroi extérieure. Ainsi, le risque de déchirure de la poche principale est réduit.

Au moins une poche auxiliaire munie d'une ouverture donnant sur l'extérieur du sac est agencée entre le fond du sac et la partie inférieure de la batterie. Une telle poche permet d'occuper utilement l'espace prévu entre le boîtier de batterie au fond du sac, en particulier pour un accessoire qui sera rangé dans cette poche en dehors des phases d'utilisation. Avantageusement, il s'agira d'un accessoire qui permet d'amortir le boîtier lorsque le sac est posé au sol. A titre d'exemple, cet accessoire peut être une bâche destinée à couvrir le sac en cas de pluie ou un cordon électrique permettant de relier la batterie au véhicule.

D'autres caractéristiques et avantages ressortiront de la description qui va suivre, donnée à titre d'exemple non limitatif, au regard des dessins dans lesquels :
- la figure 1 est une vue schématique en perspective d'un sac à dos comprenant un boîtier de batterie selon l'invention ;
- la figure 2 est une vue en coupe verticale de la figure 1 ;
- la figure 3 est une vue en perspective du boîtier de batterie agencé dans le sac de la figure 1.

Sur les différentes figures, de mêmes références désignent des éléments identiques ou similaires.

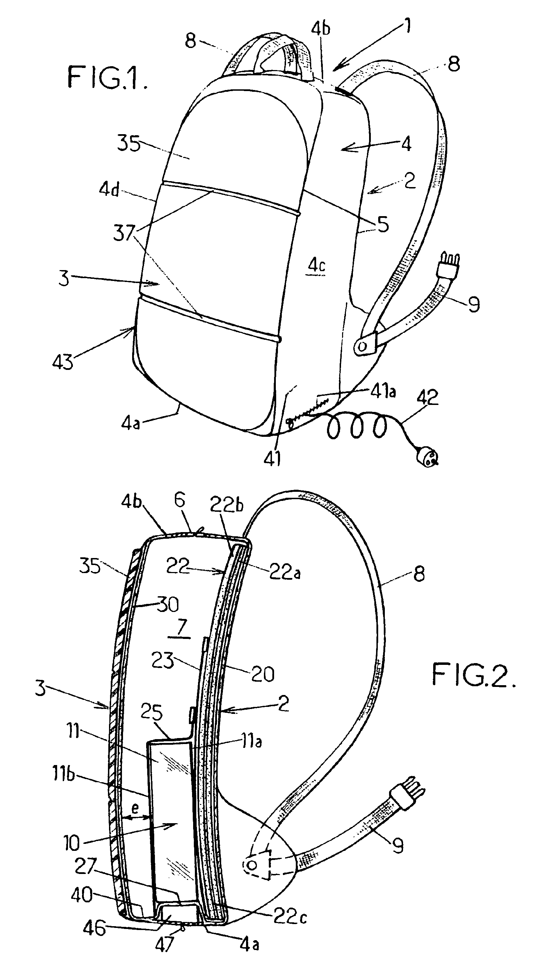

A la figure 1, est représenté un sac-à-dos 1 présentant une paroi dorsale 2, une paroi extérieure 3 à l'opposé de la paroi dorsale et une paroi latérale périphérique 4 qui relie les parois dorsale et extérieure (2,3) au niveau de coutures 5.

Dans le mode de réalisation préféré schématiquement représenté, le sac-à-dos 1 a une forme globalement parallélépipédique. Sur la paroi latérale 4, on peut donc distinguer assez nettement une portion inférieure 4a qui constitue un fond sur lequel est destiné à reposer le sac, une face supérieure 4b munie d'une fermeture à glissière 6 visible sur la figure 2, et des côtés latéraux 4c et 4d de part et d'autre du sac.

Les parois (2,3,4) définissent, au moins en partie, une poche principale 7 destinée à contenir des affaires diverses de l'utilisateur.

Il s'agit ici d'un sac-à-dos muni de bretelles 8 raccordées à proximité de l'extrémité supérieure de la face dorsale 2 et de part et d'autre du sac dans une partie inférieure via des extensions lombaires. Les bretelles 8 sont prolongées pour former une ceinture 9. Une poignée de transport à la main est également prévue.

Comme pour les sacs-à-dos connus à ce jour, les parois dorsale et latérale (2,4) peuvent être réalisées en différents matériaux, généralement un textile tissé en fibres synthétiques. Mais il pourrait s'agir de feuilles de matière naturelle ou plastique. Ici la matière 20 et 40 formant les parois dorsale et latérale (3,4) est en textile imperméable à la pluie, elle est relativement résistante aux déchirures.

Dans le mode de réalisation représenté, la paroi extérieure 3 comprend également une couche 30 de cette même matière textile. En tout état de cause, ces parois restent flexibles, c'est-à-dire qu'elles peuvent être écrasées ou pliées à la main sans effort conséquent, du moins en l'absence d'armatures comme cela est connu pour les sacs-à-dos de randonnée en montagne. Bien entendu, la paroi dorsale 2 peut comporter à l'extérieur de celle-ci, ou intégrée à celle-ci, des éléments de renfort et/ou des matelassures pour le confort. La paroi latérale 4 pourrait comporter des poches et/ou des éléments de protection.

Par exemple, il est préférable qu'une protection dorsale 22 détaillée par la suite, soit agencée contre la paroi dorsale 2. Plus particulièrement, la portion dorsale 22 constitue une garniture qui est agencée de manière amovible dans une poche dorsale 23.

On comprendra également par la suite que la forme globale du sac peut s'écarter sensiblement de la forme parallélépipédique représentée pour prendre des formes plus rondes, aplaties ou pyramidales. De même, la poche principale peut voir son ouverture agencée différemment ou représenter un volume bien moindre par rapport au volume total du sac.

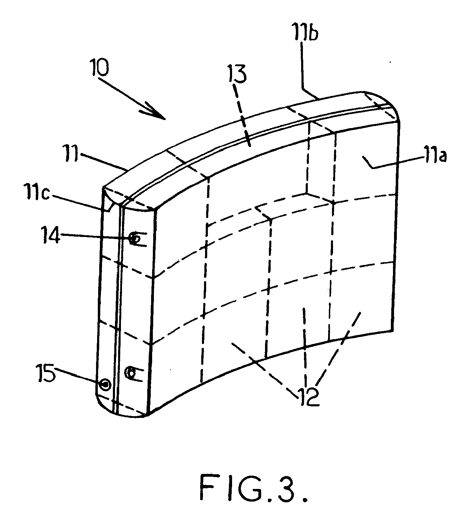

La poche principale 7 contient une batterie 10, ou plus précisément un boîtier de batterie 11 dans lequel sont agencés des éléments de batterie 12 indiqués schématiquement en traits discontinus à la figure 3. Les éléments de batterie 12 sont formés par une ou plusieurs cellules électrochimiques assemblées. Il peut s'agir de tout type de cellules électrochimiques, voire d'éléments capacitifs, de type Ni-MH, Lithium-Ion, Lithium-Polymère ou autre, du moment que leurs rapports poids/capacité et volume/capacité soient adaptés à l'application considérée.

Le boîtier de batterie peut comprendre d'autres éléments, en particulier un dispositif électronique 13 de surveillance de l'état de la batterie quant à sa charge et/ou quant à sa température. Le boîtier 11 peut aussi comprendre le chargeur lui-même et des moyens de communication.

Comme cela est connu, le boîtier de batterie 11 est rigide et est relativement résistant aux chocs. En effet, comme pour toute batterie, il ne faut pas qu'un choc puisse écraser ou percer le boîtier afin que les éléments de batterie 12 restent en place sans créer de court-circuit. Il s'agit ici de deux coques en plastique épais assemblées de manière à ne pas pouvoir être séparées facilement, par exemple à l'aide de rivets 14. Le boîtier de batterie 11 peut aussi être protégé de l'aspersion de fluides.

Le boîtier 11 est muni de moyens de connexion électrique tels que la fiche de connexion 15 visible à la figure 3. La fiche de connexion 15 est prévue avec des moyens de retenue tels qu'un filetage pour éviter une déconnexion intempestive de l'extrémité intérieure d'un câble ou d'un cordon électrique.

La batterie 10 est destinée à alimenter un moteur de propulsion électrique d'un véhicule. Même s'il s'agit d'un véhicule particulièrement léger tel qu'une trottinette, ou que le système de propulsion ne fournit qu'une assistance en plus de l'énergie musculaire de l'utilisateur, cette batterie doit avoir une capacité électrique conséquente. Par exemple une capacité de 6 ampères/heure sous 24 Volts, soit moins de 150 Wh, suffit pour certaines applications, tandis que pour d'autres on visera une capacité de 300 Wh. En tout état de cause, il s'agit d'un boîtier lourd, plus d'un kilo, en général entre 1,5 kg et 3 kg, et assez volumineux, de un à quelques litres, par exemple de 1,5 litre à 2,7 litres.

Comme cela est visible à la figure 2, la batterie 10 est agencée contre la protection dorsale 22 disposée dans la poche dorsale 23. Plus précisément, la batterie 10 est logée dans un compartiment 25 intérieur à la poche principale 7. Dans le mode de réalisation représenté, ce compartiment 25 est délimité par une feuille souple de matière imperméable et la feuille de matière identique qui délimite la poche dorsale 23. Le compartiment 25 présente une ouverture à son extrémité supérieure qui est de préférence refermable, par exemple à l'aide d'un velcro. Ainsi la batterie 10 est entourée d'une poche relativement étanche qui évite, ou du moins retarde, un éventuel contact avec un liquide.

Il est important de noter que le boîtier de batterie 11 est agencé à distance du fond 4a du sac, ici à une distance de l'ordre de 5 à 8cm. Diverses solutions techniques sont possibles pour garantir cet espacement. Il est par exemple possible de prévoir une couture du fond du compartiment 25 sur une paroi dorsale rigidifiée 2 qui retient le boîtier de batterie 11 à distance du fond. Il est possible de prévoir des blocs de mousse plus ou moins rigides sous la batterie 10 ou sous le compartiment 25, ou encore de placer un insert à cet endroit. A titre d'exemple, et tel que représenté schématiquement, un profilé en plastique en 'U' 27 est placé sous une partie de la batterie. En choisissant un profil en 'U' quelque peu ouvert avec une épaisseur de plastique autorisant une certaine élasticité, cet insert 27 a un rôle d'amortisseur.

De manière particulièrement astucieuse, il est prévu qu'une ou plusieurs poches auxiliaires soient agencées sous la batterie. Cette solution peut être combinée avec les solutions indiquées précédemment. Par exemple, dans le mode de réalisation représenté, il est prévu trois poches auxiliaires.

Ces poches comprennent une poche latérale droite 41, dont l'ouverture 41a est visible à la figure 1. Avantageusement, elle peut contenir un câble de connexion 42 pour connecter la batterie au véhicule. Une extrémité intérieure du câble 42 traverse le fond du compartiment 25, par exemple à travers un oeillet en élastomère non représenté, pour être accordé à la fiche 15 du boîtier de batterie 11. L'autre extrémité, visible sur la figure 2, pouvant être déployée depuis l'intérieur du sac jusqu'au connecteur du véhicule en étirant les spires élastiques.

Une deuxième poche latérale auxiliaire en tous points identique à la poche latérale droite, est agencée du côté gauche dans la zone indiquée par la flèche 43. Un cordon électrique est agencé dans cette deuxième poche de manière analogue au câble 42. Ce cordon peut être utilisé pour les opérations de recharge de la batterie en le connectant, soit à un chargeur, soit directement sur une prise standard du réseau de distribution électrique dans le cas où le chargeur est inclus dans le sac-à-dos. Ces deux premières poches auxiliaires sont agencées dans la partie inférieure du sac, ce qui s'avère préférable autant pour le raccordement de la batterie au véhicule que pour la stabilité du sac lors des opérations de recharge.

Une troisième poche auxiliaire 46 est prévue dans la partie médiane inférieure du sac, entre les deux premières poches, avec une ouverture 47 située sur le fond du sac. Cette poche auxiliaire 47 peut contenir avantageusement un couvre-sac imperméable, non représenté sur les figures. Celui-ci peut être déployé afin de recouvrir la paroi extérieure 3 et la paroi latérale 4, tout en restant attaché à cette poche. Toutefois, lorsque ce couvre-sac n'est pas utilisé, c'est-à-dire la plupart du temps, il forme une boule ou un amas déformable qui amortit la batterie 10 si on laisse tomber le sac au sol, et évite donc un impact brutal dans le boîtier 11. Le câble 42 et cordons d'alimentation ont un effet tout à fait similaire. Bien entendu, le nombre et le contenu de ces poches auxiliaires peut être sensiblement différent du mode de réalisation décrit à titre d'exemple et elles peuvent être combinées à d'autres moyens d'espacement et d'amortissement.

Le boîtier de batterie 11 est relativement plat avec des faces principales dorsale 11a et extérieure 11b parallèles à la paroi dorsale 2 du sac. La face dorsale 11a est légèrement arquée comme on peut le voir sur la figure 3, ceci afin de suivre au plus près la forme de la paroi dorsale 2 lorsque le sac-à-dos est porté par l'utilisateur. Cette face dorsale 11a s'étend sur sensiblement toute la largeur de la paroi dorsale 2. Elle présente donc une surface importante et permet de réaliser une batterie relativement plate, comparée aux batteries couramment utilisées pour les vélos à assistance électriques qui ont généralement une forme parallélépipédique rectangle avec une section transversale quasiment carrée.

La hauteur de la batterie 10 est aussi relativement importante, ici de l'ordre de 20cm. Mais il apparaît préférable de limiter la hauteur de la batterie pour que celle-ci soit localisée dans la portion inférieure du sac comme on peut le voir à la figure 2. C'est-à-dire que, tout en ménageant un espace libre sous la batterie 10, il est préférable que la partie supérieure du boîtier 11 ne dépasse pas la moitié, ou du moins les deux tiers de la hauteur du sac-à-dos 1 rempli. Ceci afin de favoriser l'équilibre et la stabilité du sac en abaissant son centre de gravité, tant sur le dos de l'utilisateur que lorsqu'il est posé à terre.

On notera également que les côtés latéraux 11c du boîtier de batterie 11 sont légèrement arrondis, ce qui facilite l'insertion de la batterie dans le compartiment 25, même si cette opération doit en principe rester très occasionnelle.

On notera que la forme plate de la batterie permet de ménager un espace libre entre la face extérieure 11b du boitier 11 et la paroi extérieure du sac 3, indiqué par la cote e sur la figure 2, tout en gardant une forme et un volume du sac tout à fait habituel dans sa configuration de capacité maximale.

Comme indiqué précédemment, la paroi extérieure 3 du sac comprend une couche 30 du matériau textile utilisé pour les autres parois. Mais on notera la présence d'une coque 35 réalisée en matière synthétique. Il s'agit ici d'une coque réalisée en mousse de polymère, ici en mousse EVA, qui est thermoformée. L'épaisseur de cette mousse est sensiblement plus importante que la matière textile formant la paroi 30. Il s'agit donc d'un élément sensiblement plus rigide que la matière textile formant le sac.

Avec une telle mousse thermoformée, la coque 35 est globalement bien plus rigide que la toile du sac-à-dos 1, mais elle reste susceptible de déformation pour s'adapter au contenu du sac et même pourrait être pliée en appuyant fortement avec les mains, par exemple si l'on veut arranger le sac vide dans un casier. Dans ce but, des rainures transversales 37 favorisent une déformation volontaire. Mais la coque extérieure 35 pourrait être bien plus rigide en la réalisant par exemple en matière plastique injectée d'une épaisseur de quelques millimètres, ou encore en utilisant une résine chargée de fibres.

Pour obtenir un effet significatif sur la protection de l'utilisateur, il s'avère hautement préférable que la coque 35 couvre au moins la zone de la paroi extérieure 3 en regard avec la batterie 10, c'est-à-dire avoir une surface au moins égale à la face extérieure 11b du boîtier de batterie et être agencée en regard de celle-ci. Mais comme représenté, la coque 35 couvre de préférence une surface bien plus importante correspondant sensiblement à toute la surface extérieure du sac.

En cas de chute de l'utilisateur, si la paroi extérieure 3 du sac vient heurter le sol ou un obstacle, par exemple en cas de roulade, la coque 35 a pour effet de transmettre la force du point ou de la ligne d'impact sur une surface plus étendue qu'en la seule présence de la couche de matière textile 30 sur la paroi dorsale 3. La force exercée sur le boîtier 11 de la batterie est donc appliquée sur une surface plus étendue, ceci d'autant plus si des objets placés dans la poche principale permettent d'amortir et de diffuser encore cette force d'impact. Le boîtier de batterie 11 lui-même est donc protégé et risque moins d'être percé ou fendu, ce qui bien entendu est très appréciable pour une batterie électrique. Mais aussi, et de manière plus inattendue, la batterie 10 est moins susceptible d'un pivotement ou basculement dans son ensemble par rapport à la paroi dorsale 2 en contact avec le dos de l'utilisateur. La batterie recevant une pression sur une plus large partie de sa face extérieure 11b exerce une pression plus répartie sur la paroi dorsale 2 et sur la protection dorsale 22 qui peut alors pleinement jouer son rôle amortisseur. Tandis que si la batterie effectue un déplacement très ponctuel vers la protection dorsale 22, le reste de la face dorsale 11a et globalement la batterie pouvant avoir tendance à s'éloigner de la paroi dorsale 2 du fait de l'inertie acquise lors de la chute, la protection dorsale 22 peut avoir un effet très limité. Par conséquent, la présence à la coque 35 permet d'utiliser une couche de protection 22 qui conserve une épaisseur acceptable malgré la présence d'un objet particulièrement rigide et lourd dans le sac-à-dos.

Avec cet objectif de limiter l'épaisseur de la protection dorsale 22, et même indépendamment de la présence au nom d'une coque 35 de rigidification extérieure, il s'avère que l'emploi d'une protection ou garniture 22 présentant des couches de natures différentes, à savoir au moins une couche d'absorption des déformations, par exemple de type mousse, et au moins une couche de rigidification, la protection obtenue peut être tout à fait comparable à celle obtenue avec une couche d'épaisseur bien plus importante mais constituée uniquement de matériau déformable.

Par exemple, dans le mode de réalisation représenté, la protection dorsale 22 comprend deux épaisseurs de mousse néoprène (22a,22b) d'environ 6mm, séparées par une couche de rigidification 22c. Diverses solutions sont possibles pour réaliser la couche de rigidification 22c. Il peut s'agir par exemple d'une couche quasiment rigide en matière plastique pleine. Mais il est préférable pour son efficacité et afin de faciliter le rangement du sac, que cette couche de rigidification 22c reste déformable et flexible. A titre d'exemple, on peut utiliser pour la couche de rigidification 22c une feuille de polymère rigide présentant de multiples fentes formant des articulations limitées ponctuelles qui confèrent une certaine déformabilité, telle que décrite dans le document WO2008/009839.

Le fait d'agencer la coque de protection 35 à l'extérieur, peut conférer un avantage supplémentaire, comme par exemple éviter un déchirement de la couche textile en cas de glissade, et aussi rendre imperméable cette face exposée du sac. Mais il est parfaitement possible d'obtenir un effet de protection vis-à-vis de possibles mouvements de la batterie 10 dans la poche principale 7 plaçant cette coque sur la face intérieure de la paroi dorsale 2, ou encore de placer cette coque dans une double paroi textile.

La coque extérieure 35 est ici encollée sur toute la surface de la couche 30 de matière textile qui forme la paroi dorsale. Il n'est toutefois pas exclu que la coque 35 constitue à elle seule la paroi dorsale, ou du moins une partie de celle-ci ses bords périphériques supportant une liaison avec le reste des parois de la poche principale 7. Bien entendu, ce mode de réalisation n'est nullement limitatif et la coque 35 peut être plus étendue et recouvrir partiellement la paroi latérale 4. On évitera toutefois une coque rigide s'étendant jusqu'à la paroi dorsale 2 dont le bord en contact avec le dos pourrait avoir un effet exactement contraire à celui recherché. Il est aussi parfaitement possible de prévoir des éléments analogues à la coque sous forme d'une ou plusieurs plaques fixées 1 sur la paroi latérale et en particulier sur les côtés latéraux (4c, 4d) .

Par ailleurs, il est à noter que différents types de chargeurs peuvent être utilisés avec la batterie 10, comme un chargeur d'appoint de faible volume, ou un chargeur plus puissant permettant de recharger la batterie en un temps plus court, par exemple inférieur à 3h, les dits chargeurs pouvant prendre place dans le sac-à-dos.

## Revendications

1. Sac à dos pour alimenter une propulsion électrique de véhicule, comprenant une poche principale (7) délimitée par une paroi dorsale (2) destinée à venir en contact avec le dos d'un utilisateur, une paroi extérieure (3) agencée de manière opposée à la paroi dorsale et une paroi latérale (4) reliant les parois dorsale et extérieure, au moins la paroi dorsale et la paroi latérale étant réalisées en une matière flexible (20,30), ladite poche principale contenant des éléments de batterie (12) logés dans un boîtier rigide (11), **caractérisé en ce que** le boîtier de batterie (11) présente une face dorsale (11a) agencée parallèlement et à proximité de la paroi dorsale (2) de la poche principale,
et **en ce que** la paroi extérieure (3) de ladite poche principale présente un élément de coque (35) significativement plus rigide que la matière textile des parois dorsale et latérale qui est agencée en regard dudit boîtier de batterie et qui recouvre une zone plus étendue que celle correspondant audit boîtier de batterie.

2. Sac à dos selon la revendication 1, dans lequel le boîtier de batterie (11) présente une forme aplatie avec une plus grande face correspondant à la face dorsale (11a) dudit boîtier.

3. Sac à dos selon l'une des revendications précédentes, dans lequel le boîtier de batterie (11) s'étend horizontalement sur sensiblement toute la largeur de la paroi dorsale (2) du sac.

4. Sac à dos selon l'une des revendications précédentes, dans lequel la paroi dorsale (2) du sac présente une garniture (22) comprenant au moins une couche élastiquement déformable (22a ;22b) d'absorption de choc, et au moins une couche de rigidification (22c).

5. Sac à dos selon l'une des revendications précédentes, dans lequel le boîtier de batterie (11) est agencé en regard d'une portion inférieure de la paroi dorsale (2) et à distance du fond (4a) sur lequel le sac est destiné à reposer.

6. Sac à dos selon l'une des revendications précédentes, dans lequel le boîtier de batterie (11) est agencé dans la poche principale (7) de sorte qu'une face extérieure (11b) du boîtier de batterie opposée à la face dorsale (11a) de celui-ci, soit agencée à distance (e) de la paroi extérieure (3) de ladite poche principale.

7. Sac à dos selon l'une des revendications précédentes, dans lequel le boîtier de batterie (11) est agencé dans un compartiment (25) intérieur à la poche principale, ledit compartiment étant réalisé en matériau imperméable.

8. Sac à dos selon l'une des revendications précédentes, dans lequel la coque (35) associée à la paroi extérieure (3) est globalement déformable et de préférence réalisée en mousse de polymère thermoformée.

9. Sac à dos selon l'une des revendications précédentes, dans lequel la coque (35) est agencée sur la face extérieure de la paroi extérieure (3) de la poche principale (7) et couvre la majeure partie de la paroi extérieure (3).

10. Sac à dos selon l'une des revendications précédentes, dans lequel au moins une poche auxiliaire (41 ;43 ; 46) munie d'une ouverture (41a ; 47) donnant sur l'extérieur du sac est agencée entre le fond du sac (4a) et la partie inférieure de la batterie (10).

## Patentansprüche

1. Rucksack zur Stromversorgung eines elektrischen Antriebs eines Fahrzeugs, umfassend eine Haupttasche (7), die von einer Rückenwand (2) begrenzt ist, die dazu bestimmt ist, mit dem Rücken eines Benutzers in Kontakt zu kommen, eine Außenwand (3), die gegenüber der Rückenwand angeordnet ist, und eine Seitenwand (4), die die Rückenwand und die Außenwand verbindet, wobei mindestens die Rückenwand und die Seitenwand aus einem biegsamen Material (20, 30) hergestellt sind, wobei die Haupttasche Batterieelemente (12) enthält, die in einem starren Gehäuse (11) angeordnet sind, **dadurch gekennzeichnet, dass** das Batteriegehäuse (11) eine Rückseite (11a) aufweist, die parallel und in der Nähe zu der Rückenwand (2) der Haupttasche angeordnet ist, und dass die Außenwand (3) der Haupttasche ein Schalenelement (35) aufweist,
das wesentlich steifer als das Textilmaterial der Rücken und Seitenwand ist, gegenüber dem Batteriegehäuse angeordnet ist und einen größeren Bereich als jenen, der dem Batteriegehäuse entspricht, abdeckt.

2. Rucksack nach Anspruch 1, bei dem das Batteriegehäuse (11) eine abgeflachte Form mit einer größeren Fläche aufweist, die der Rückseite (11a) des Gehäuses entspricht.

3. Rucksack nach einem der vorhergehenden Ansprüche, bei dem sich das Batteriegehäuse (11) horizontal über im Wesentlichen die gesamte Breite der Rückenwand (2) des Rucksacks erstreckt.

4. Rucksack nach einem der vorhergehenden Ansprüche, bei dem die Rückenwand (2) des Rucksacks eine Ausstattung (22) aufweist, umfassend mindestens eine elastisch verformbare Schicht (22a; 22b) zur Stoßdämpfung und mindestens eine Versteifungsschicht (22c).

5. Rucksack nach einem der vorhergehenden Ansprüche, bei dem das Batteriegehäuse (11) gegenüber einem unteren Abschnitt der Rückenwand (2) und mit Abstand zum Boden (4a), auf dem der Rucksack stehen soll, angeordnet ist.

6. Rucksack nach einem der vorhergehenden Ansprüche, bei dem das Batteriegehäuse (11) in der Haupttasche (7) angeordnet ist, so dass eine Außenseite (11b) des Batteriegehäuses gegenüber der Rückseite (11a) desselben in einem Abstand (e) zur Außenwand (3) der Haupttasche angeordnet ist.

7. Rucksack nach einem der vorhergehenden Ansprüche, bei dem das Batteriegehäuse (11) in einem Innenabteil (25) der Haupttasche angeordnet ist, wobei das Abteil aus einem undurchlässigen Material hergestellt ist.

8. Rucksack nach einem der vorhergehenden Ansprüche, bei dem die Schale (35), die mit der Außenwand (3) verbunden ist, global verformbar ist und vorzugsweise aus thermogeformtem Polymerschaum besteht.

9. Rucksack nach einem der vorhergehenden Ansprüche, bei dem die Schale (35) auf der Außenseite der Außenwand (3) der Haupttasche (7) angeordnet ist und den größten Teil der Außenwand (3) abdeckt.

10. Rucksack nach einem der vorhergehenden Ansprüche, bei dem mindestens eine Nebentasche (41; 43; 46), die mit einer Öffnung (41a; 47), die zum Äußeren des Rucksacks führt, versehen ist, zwischen dem Boden des Rucksacks (4a) und dem unteren Teil der Batterie (10) angeordnet ist.

## Claims

1. Backpack for supplying an electric vehicle drive, comprising a main pocket (7) bounded by a dorsal wall (2) intended to be placed in contact with a user's back, an outer wall (3) disposed opposite the dorsal wall and a side wall (4) connecting the dorsal and outer walls, at least the dorsal wall and side wall being made from a flexible material (20, 30), said main pocket containing battery elements (12) housed in a rigid housing (11), **characterised in that** the battery housing (11) has a dorsal face (11a) disposed parallel with and close to the dorsal wall (2) of the main pocket,
and **in that** the outer wall (3) of said main pocket has a shell element (35) significantly more rigid than the textile material of the dorsal and side walls which is disposed facing said battery housing and which covers a more extensive zone than that corresponding to said battery housing.

2. Backpack as claimed in claim 1, in which the battery housing (11) is of a flat shape with a larger face corresponding to said dorsal face (11a) of said housing.

3. Backpack as claimed in one of the preceding claims, in which the battery housing (11) extends horizontally across substantially the entire width of the dorsal wall (2) of the pack.

4. Backpack as claimed in one of the preceding claims, in which the dorsal wall (2) of the pack has a lining (22) comprising at least one elastically deformable shock absorption layer (22a; 22b) and at least one stiffening layer (22c).

5. Backpack as claimed in one of the preceding claims, in which the battery housing (11) is disposed facing a bottom portion of the dorsal wall (2) and at a distance from the base (4a) on which the backpack is designed to stand.

6. Backpack as claimed in one of the preceding claims, in which the battery housing (11) is disposed in the main pocket (7) so that an outer face (11b) of the battery housing opposite the dorsal face (11a) thereof is disposed at a distance (e) from the outer wall (3) of said main pocket.

7. Backpack as claimed in one of the preceding claims, in which the battery housing (11) is disposed in an interior compartment (25) of the main pocket, said compartment being made from an impermeable material.

8. Backpack as claimed in one of the preceding claims, in which the shell (35) co-operating with the outer wall (3) is globally deformable and preferably made from thermo-formed polymer foam.

9. Backpack as claimed in one of the preceding claims, in which the shell (35) is disposed on the exterior face of the outer wall (3) of the main pocket (7) and covers the major part of the outer wall (3).

10. Backpack as claimed in one of the preceding claims, in which at least one auxiliary pocket (41; 43; 46) provided with an opening (41a; 47) facing the exterior of the pack is disposed between the pack base (4a) and the bottom part of the battery (10).
